Europäisches Patentamt

European Patent Office

Office européen des brevets

Publication number: **0 361 492**
**A2**

# EUROPEAN PATENT APPLICATION

Application number: 89118022.6

Date of filing: 29.09.89

Int. Cl.⁵ **G11B 7/00**

Priority: 30.09.88 JP 244256/88

Date of publication of application:
**04.04.90 Bulletin 90/14**

Designated Contracting States:
**DE FR GB**

Applicant: **SONY CORPORATION**
**7-35, Kitashinagawa 6-chome Shinagawa-ku**
**Tokyo(JP)**

Inventor: **Owa, Hideo Kanagawa**
**c/o Sony Corporation 7-35 Kitashinagawa**
**6-chome**
**Shinagawa-ku Tokyo(JP)**

Representative: **Schmidt-Evers, Jürgen,**
**Dipl.-Ing. et al**
**Patentanwälte Dipl.-Ing. H. Mitscherlich**
**Dipl.-Ing. K. Gunschmann Dipl.-Ing.**
**Dr.rer.nat. W. Körber Dipl.-Ing. J.**
**Schmidt-Evers Dipl.-Ing. W. Melzer**
**Steinsdorfstrasse 10**
**D-8000 München 22(DE)**

### Apparatus for recording information on an optical disk.

An apparatus for optically recording an information signal on tracks of an optical disk (D), the optical disk (D) being pre-recorded with address signals and rotated at a constant velocity having an oscillator circuit (14) for generating a carrier signal (fc), a modulator (13) for frequency-modulating the information signal by the carrier signal (fc), a device (21) for generating a laser beam, a circuit (15, 16) for modulating the laser beam by the frequency-modulated information signal, an optical head (20) for directing the laser beam on the optical disk (D) and for obtaining a reflected laser beam from the optical disk (D), a device (40, 41) for moving the optical head (20) in a radius direction of the optical disk (D); a detector (25) for detecting the address signals from the reflected laser beam, and a circuit (32) for varying the frequency of the carrier signal (fc) according to the address signals obtained from the detecting circuit (25), wherein the frequency of the carrier signal (fc) is set higher when the laser beam is directed on outside tracks of the optical disk (D) than when the laser beam is directed on inside tracks of the optical disk (D), thus reducing an influ-ence of secondary distortion occurred in the re-production mode.

FIG. 1

# APPARATUS FOR RECORDING INFORMATION ON AN OPTICAL DISK

## Field of the Invention

The present invention relates generally to optical disk recording apparatus and, more particularly, to an apparatus for recording information on an optical disk, suitable for recording frequency-modulated information on an optical disk which is rotated at a constant angular velocity.

## Description of the Prior Art

An optical disk (sometimes referred to as a compact disk or a video disk) has concave-shaped pits spirally arranged on a recording surface thereof. In this case, the sizes (duty ratios) of the concave-shaped pits are modulated in response to the recording informations so that a digital audio signal or video signal can be reproduced. On the other hand, an erasable optical disk is put into practical use. This erasable optical disk is capable of recording and reproducing information by using a recording medium of photo-sensitive type in which the reflectivity is changed by the irradiation of laser light, or using a recording medium in which pits are formed by heat generated from the irradiation of laser light.

In the above-noted erasable optical disk, pre-grooves for guiding a laser beam, sample bits, track address etc., are previously recorded along the track of the recording surface. The irradiation of the laser beam on the track is turned on and off in response to a recording signal, and the temperature on the recording surface at the position which the laser beam impinges on is momentarily increased and the recording signal is recorded in the form of a dot information or a pit information.

In the above-mentioned optical disk, its recording density is determined in association with the revolution rate of the optical disk and the wavelength of the laser beam. Generally, when a video signal which is repeated at one field unit is recorded, a one frame image signal can be recorded on one track of the optical disk which is rotated at a constant angular velocity.

A circuit of a recording system for such an optical disk is provided with a frequency modulator which frequency-modulates a wide band video signal to be recorded, with a predetermined carrier frequency, and the power of the laser beam is modulated by an FM (frequency-modulated) signal derived from the frequency modulator. In the case of the optical disk rotating at a constant angular velocity, the linear velocity is increased in the outside track as compared with the inside track so that, when a signal is recorded on the outside track of the optical disk, the output power of the laser beam has to be increased as compared with a case where the signal is recorded on the inside track of the optical disk.

However, when a semiconductor diode is used as a laser light source, it is very difficult to sufficiently increase the laser power for the outside track of the optical disk. Then, it is frequently observed that a so-called under-power occurs in the outside track of the optical disk. Then, the dot information or the pit information recorded on the outside track of the optical disk becomes deteriorated, in dot shape and in duty ratio, because the rise in temperature for the dot information recorded on the outside track of the optical disk is not sufficient as compared with the dot information recorded on the inside track of the optical disk. Thus, a secondary distortion frequently occurs in the reproduction mode.

When frequency-modulated, a wide band video signal $S_v$ is generally determined to have a carrier frequency $F_c$ at which a side band wave of a frequency-modulated wave can be adequately reproduced from the inside track in which the linear velocity is low. In general, a modulation transfer function (MTF) value indicative of a recording and reproducing ability of an optical disk is proportional to $(2NA/\lambda)v$ where $\lambda$ is the wavelength, NA is the numerical aperature and $v$ is the linear velocity so that, when the MTF value is increased, a reproduced amount of secondary distortion occurred in the high frequency side is increased. Therefore, the secondary distortion produced in the outside track of the optical disk cannot be removed completely by the correction of duty ratio through a limiter upon FM-modulation. There is then presented the problem that a beat noise frequently occurs in a video signal reproduced from the outside track of the optical disk, thus deteriorating the signal-to-noise (S/N) ratio.

## OBJECTS AND SUMMARY OF THE INVENTION

Accordingly, it is an object of the present invention to provide an improved apparatus for recording information on an optical disk which can eliminate the defects encountered with the prior art.

More specifically, it is another object of the present invention to provide an apparatus for recording information on an optical disk in which a beat noise can be reduced when an information signal is reproduced from outside tracks of an optical disk.

It is still another object of the present invention to provide an apparatus for recording information on an optical disk in which the signal-to-noise (S/N) ratio of a reproduced picture can be improved.

According to an aspect of the present invention, there is provided an apparatus for optically recording an information signal on tracks of an optical disk, said optical disk being pre-recorded with address signals and rotated at a constant velocity, comprising:

(a) oscillator means for generating a carrier signal;

(b) means for frequency-modulating said information signal by said carrier signal;

(c) means for generating a laser beam;

(d) means for modulating said laser beam by said frequency-modulated information signal;

(e) optical means for directing said laser beam on said optical disk and for obtaining a reflected laser beam from said optical disk;

(f) means for moving said optical means in a radius direction of said optical disk;

(g) means for detecting said address signals from said reflected laser beam; and

(h) means for varying the frequency of said carrier signal according to said address signals obtained from said detecting means.

According to another aspect of the present invention, there is provided an apparatus for recording a frequency-modulated information signal on an optical disk which is rotated at a constant angular velocity, comprising:

(1) means for frequency-modulating an information signal by a carrier signal;

(2) means for generating a laser beam;

(3) means for modulating said laser beam by said frequency-modulated information signal;

(4) means for impinging said laser beam onto said optical disk;

(5) means for moving said impinging means in a radius direction of said optical disk;

(6) means for detecting the position of said impinging means relative to said optical disk; and

(7) means for varying the frequency of said carrier signal according to the output of said detecting means.

The above and other objects and features and advantages of the present invention will be apparent in the following detailed description of a preferred embodiment when read in conjunction with the accompanying drawings, in which like reference numerals are used to represent the same or similar parts in the several views.

BRIEF DESCRIPTION OF THE DRAWINGS

The accompanying drawings show a preferred embodiment of the invention in which:

Fig. 1 is a block diagram showing an apparatus for recording information on an optical disk according to an embodiment of the present invention;

Figs. 2A-2D are graphical representations of an FM carrier frequency and a reproduced signal containing a secondary distortion, and to which reference will be made in explaining operation of the apparatus shown in Fig. 1. respectively;

Fig. 3 is a graphical representation showing an FM carrier signal, and to which reference will also be made in explaining the change of the FM carrier signal; and

Fig. 4 is a waveform diagram of a recorded video signal to which reference will be made in explaining operation of the apparatus shown in Fig. 1.

DETAILED DESCRIPTION OF A PREFERRED EMBODIMENT

An apparatus for recording information on an optical disk according to an embodiment of the present invention will hereinafter be explained with reference to the drawings.

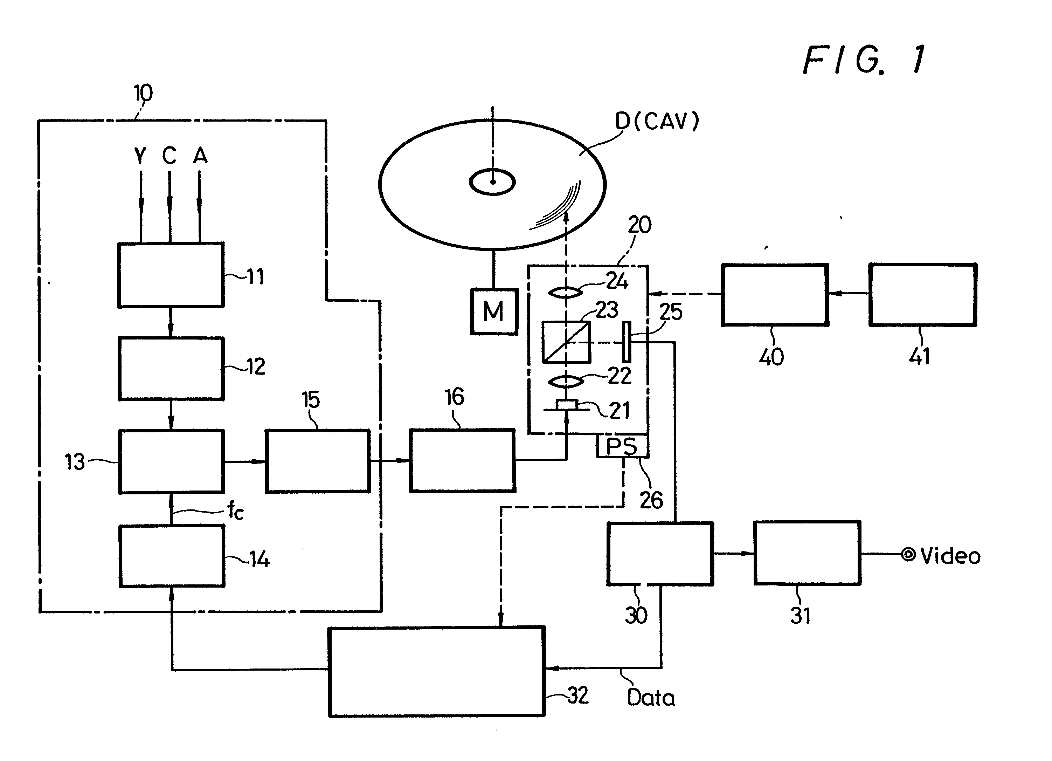

Referring to the drawings in detail and, initially to Fig. 1. there is provided a circuit 10 of a recording system, and an optical head 20 impinges a laser beam on an optical disk D that is rotated at a constant revolution rate by a spindle motor M. As is conventional, the optical head 20 is controlled by a tracking signal so that it may move along the radius direction of the optical disk D. This is represented diagrammatically in Fig. 1 by a motor 40 which moves the head 20 in response to signals from a conventional tracking control unit 41.

A reflected-back light, which is the laser beam impinged on the optical disk D and reflected thereon, is returned to the optical head 20, and is supplied to a demodulating circuit 30, in which it is demodulated to provide a reproduced RF (radio frequency) signal as an original video signal. The reproduced signal thus demodulated is supplied to a signal processor circuit 31, in which it is processed to provide a composite video signal or a component signal.

The optical disk apparatus of the present invention is provided with a system controller 32, which will be explained later in detail, and which sets the recording mode, the reproducing mode, determines the laser power, generates various servo signals, decodes address data, and effects other signal processings.

A luminance signal Y, a chrominance difference signal C and an audio signal A input to the recording circuit 10 are supplied through a selecting circuit 11 to a signal processing circuit 12. in which they are converted to a recording video signal. This converting technique is disclosed in Japanese Patent Application No. 63-51563 (corresponding to co-pending U.S. Patent Application No. 180.340) that the assignee of the present application has previously proposed. the disclosure of which is hereby incorporated by reference into this specification. The recording video signal from the signal processor circuit 12 is supplied to a frequency modulating circuit 13.

A carrier signal generator circuit 14 generates a frequency modulating carrier signal $f_c$. and this carrier signal $f_c$ supplied to the frequency modulating circuit 13. whereby the recording video signal. for example. is frequency-modulated in range of from about 8.5 MHz to 10.5 MHz relative to the level of the recording video signal. The recording signal thus converted to an FM signal. is supplied through an output circuit 15 to a laser power modulating circuit 16. The laser power of a laser light source 21 is modulated by the output of the laser power modulating circuit 16.

The laser beam emitted from the laser light source 21 travels through a collimator lens 22. a polarizing beam splitter 23 and an objective lens 24 and then impinges on the optical disk D. causing the temperature at the spot position. irradiated by the laser beam. to rise to write dot information corresponding to the recording signal in the recording track of the optical disk D. This recording operation generally proceeds from the inside track to the outside track of the optical disk D along so-called pre-grooves previously formed on the optical disk D in a spiral-fashion.

Upon recording, a photodetector 25 reads address information previously recorded on the optical disk D and the address data of the track in which the recording signal is recorded can be detected on the basis of the thus detected address data.

The address data thus detected from the photodetector 25 is supplied through the demodulating circuit 30 to the system controller 32, and the system controller 32 effects various control operations for causing the optical disk apparatus to carry out the recording operation on the basis of the address data.

In the apparatus for recording information on an optical disk according to the present invention, the position of the optical head 20 is detected and the frequency modulation carrier frequency $f_c$ changed on the basis of the position information thus detected.

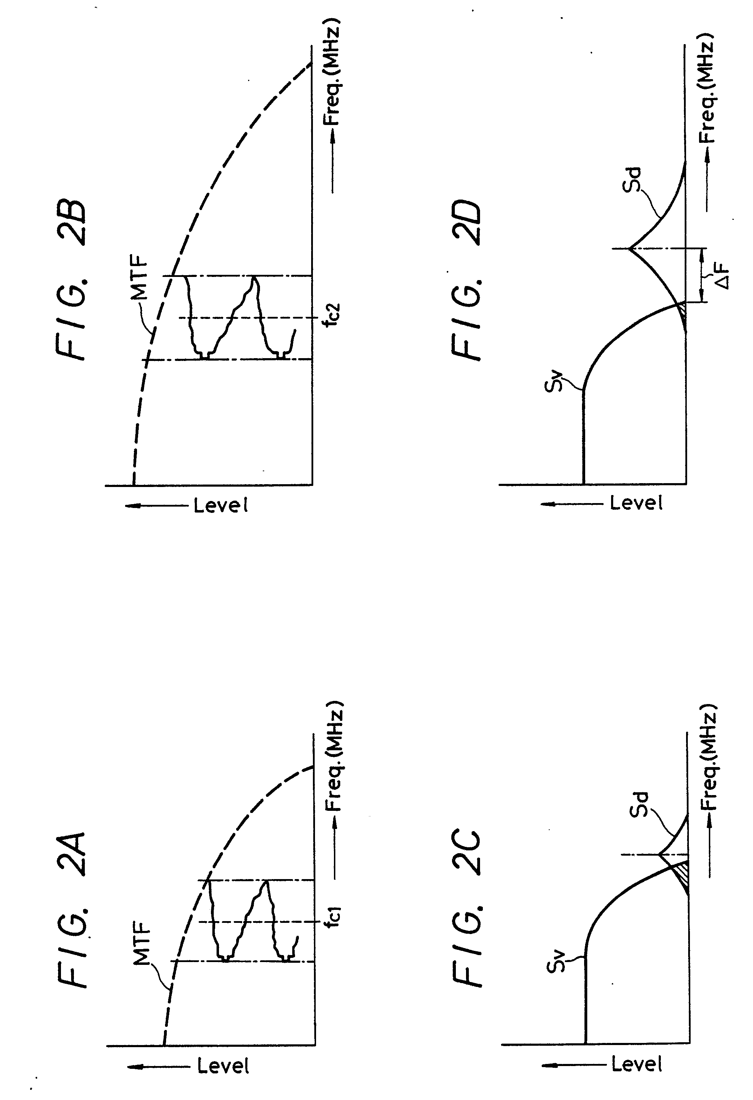

More specifically. when the frequency-modulated video signal is recorded on the inside track of the optical disk D. since the MTF value is relatively narrow. the system controller 32 controls the carrier signal generator circuit 14 such that the frequency modulation carrier frequency $f_c$ is selected to be relative low such as a carrier frequency $f_{c1}$ to thereby enable a band of frequencies for the video signal Sv to be sufficiently reproduced as shown in Fig. 2A. When on the other hand the frequency-modulated video signal is recorded on the outside track of the optical disk D. the system controller 32 controls the carrier signal generator circuit 14 such that the frequency modulation carrier signal is changed to a carrier frequency $f_{c2}$ which is higher than the previous carrier frequency $f_{c1}$ as shown in Fig. 2B.

When the above control is performed. upon reproduction. the demodulated signal Sd is produced with a portion within the band of the video signal Sv due to the interference with the secondary distortion occurred on the inside track as shown by a hatched area in Fig. 2C Since the linear velocity on the inside track is low. the dot information of accurate duty ratio can be recorded thereon by the laser beam. Also. since the MTF value indicating the recording and reproducing ability for the secondary distortion is small. the secondary distortion is considerably small. Thus. the above-mentioned problem is not so important.

Since the linear velocity is high in the outside track of the optical disk D and the MTF value indicating the recording and reproducing ability of the optical disk D is high. the demodulated signal due to the interference with the secondary distortion presents a large interference amount. Whereas, as the subcarrier frequency $f_{c2}$ is increased. the demodulated signal Sd is made distant from the upper limit of the video signal Sv by an amount $\Delta F$. whereby the amount in which the demodulated signal Sd is mixed into the band of the video signal Sv can be reduced as shown in Fig. 2D. Therefore. it is possible to reduce the amount in which the image quality is deteriorated by the noise based on the secondary distortion.

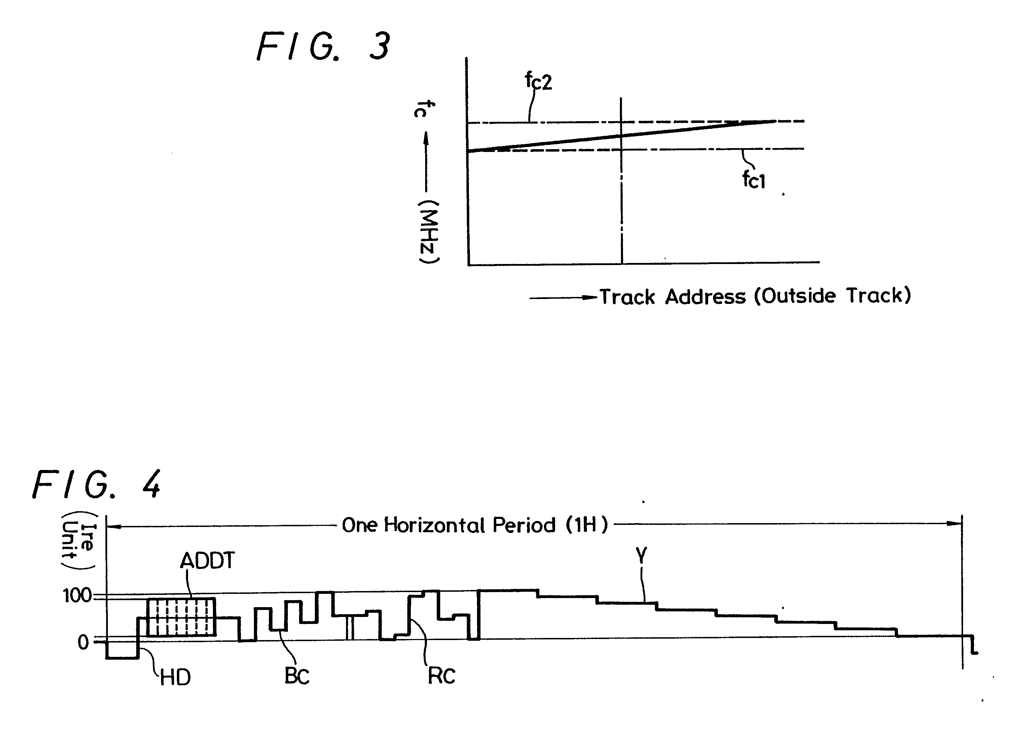

The carrier frequency $f_c$ can be gradually increased in proportion to the position of the optical head. or the track address as shown by a solid line in Fig. 3. Alternatively. the carrier frequency $f_c$ can be increased relative to only a certain recording track position (outermost track from the intermediate area) as shown by a dashed line in Fig. 3.

Further. the position of the optical head 20 can be detected by a position sensor 26 mounted to the optical head as shown in Fig. 1.

Upon reproduction. even though the carrier frequency is changed. if the frequency deviation is the same in the inside and outside tracks of the optical disk D. the change of the carrier frequency does not cause any problem

Fig. 4 is a waveform diagram of signals (in one horizontal period) appeared in the video signal recording and reproducing apparatus (see the above referenced copending U.S. Patent Application No. 180.340).

According to this invention, the signal is constructed by a time-division system as follows. As shown in Fig. 4, subsequent to a horizontal synchronizing signal HD. audio data ADDT. which is converted to a pulse code modulated (PCM) digital signal is inserted in the form of a time-compressed digital signal. Subsequent to the audio data ADDT. two difference chrominance signals Bc (B-Y) and Rc (R-Y), time-compressed by 1 4, are inserted and a luminance signal Y. time-compressed by 1 2, is inserted in one horizontal period (1H).

Although the frequency band of the above-noted video signal is widened, the chrominance signal components and the luminance signal component are recorded at different positions. whereby the signal can be prevented from becoming deteriorated in S N ratio by cross modulation distortion.

According to the apparatus for optically recording an information signal on tracks of an optical disk. as set forth above, since the carrier frequency. which frequency-modulates a recording information. is changed on the inside track and the outside track of the optical disk, the frequency of the carrier frequency is increased on the outside track of the optical disk rotating at a constant angular velocity. whereby the influence of the secondary distortion can be reduced, thus the S.N ratio of the reproduced picture can be increased.

Having described a preferred embodiment of the present invention with reference to the accompanying drawings. it is to be understood that the present invention is not limited to that precise embodiment and that various changes and modifications can be effected by one skilled in the art without departing from the spirit and scope of the invention as defined by the appended claims.

Claims

1. An apparatus for optically recording an information signal on tracks of an optical disk (D), said optical disk (D) being pre-recorded with address signals and rotated at a constant velocity. comprising:

(a) oscillator means (14) for generating a carrier signal (fc)

(b) modulator means (13) connected to said oscillator means (14) for frequency-modulating said information signal by said carrier signal (fc);

(c) means (21) for generating a laser beam:

(d) means (15, 16) connected to said modulator means (13) for modulating said laser beam by said frequency-modulated information signal:

(e) optical means (22. 23. 24) for directing said laser beam on said optical disk (D) and for obtaining a reflected laser beam from said optical disk (D);

(f) means (40. 41) for moving said optical means (22. 23. 24) in a radius direction of said optical disk;

(g) detecting means (25) connected to receive said reflected laser beam for detecting said address signals from said reflected laser beam; and

(h) means (32) connected to said detecting means (25) and to said oscillator means (14) for varying the frequency of said carrier signal (fc) according to said address signals obtained from said detecting means (25).

2. The apparatus according to claim 1. in which said means (32) for varying the carrier frequency incorporates means to set the frequency (fc) of said carrier signals higher when said laser beam is directed on outside tracks of said optical disk (D) than when said laser beam is directed on inside tracks of said optical disk (D).

3. The apparatus according to claim 2. in which said means (32) for varying the carrier frequency incorporates means to increase the frequency of said carrier signal ($f_c$) as said laser beam is moved from an inside track to an outside track of said optical disk (D).

4. The apparatus according to anyone of claims 1 to 3. in which said information signal includes a video signal (Y. C) and an audio signal (A).

5. The apparatus according to claim 4. in which said video signal (Y. C) is time-compressed and said audio signal (A) is a digital signal.

6. The apparatus according to anyone of claims 1 to 5. further comprising means (30, 31) connected to receive said reflected laser beam for demodulating said frequency-modulated information signal.

7. An apparatus for recording a frequency-modulated information signal on an optical disk (D) which is rotated at a constant angular velocity. comprising:

(1) modulator means (13) for frequency-modulating an information signal by a carrier signal:

(2) means (21) for generating a laser beam:

(3) means (15. 16) connected to said modulator means (13) for modulating said laser beam by said frequency-modulated information signal:

(4) means (22. 23. 24) for impinging said laser beam onto said optical disk (D):

(5) means (40. 41) for moving said impinging means (22, 23, 24) in a radius direction of said optical disk (D); (6) means (26) connected to said impinging means (22, 23, 24) for detecting the position of said impinging means (22, 23, 24) relative to said optical disk (D); and (7) means (32) connected to said modulator means (13) for varying the frequency of said carrier signal according to the output of said detecting means (26).

8. The apparatus according to claim 7, in which said means (32) for varying the carrier frequency incorporates means for setting the frequency of said carrier signal higher when said impinging means (22, 23, 24) is located at an outside position of said optical disk (D) than when said impinging means (22, 23, 24) is located at an inside position of said optical disk (D).

9. The apparatus according to claim 8, in which said means (32) for varying the carrier frequency incorporates means for adjusting frequency of said carrier signal at an increased frequency as said impinging means (22, 23, 24) is moved from an inside position to an outside position of said optical disk (D).

10. The apparatus according to anyone of claims 7 to 9, in which said information signal is a video signal (Y, C).

11. The apparatus according to claim 10, further comprising means (30) for demodulating said frequency-modulated video signal.

FIG. 1

FIG. 2A  FIG. 2B  FIG. 2C  FIG. 2D

# FIG. 3

fc2

fc

(MHz)

fc1

→ Track Address (Outside Track)

EP 0 361 492 A2

# FIG. 4

(Ire Unit)

One Horizontal Period (1H)

ADDT

Y

100

0

HD   BC   RC